# EUROPEAN PATENT APPLICATION

(11) **EP 2 658 063 A2**
(43) Date of publication of application: **30.10.2013**
(21) Application number: 13163183.0
(22) Date of filing: 10.04.2013
(51) Int. Cl.: H02H 7/06, H02H 9/00, H02H 3/02

(54) **Subtransient current suppression**

(30) Priority: 26.04.2012 US 201213457061
(71) Applicant: The Boeing Company, Chicago, IL 60606-2016 (US)
(72) Inventor: Holley, Robert D, Seattle, WA 98133 (US); Currier, Thomas F., Lynnwood, WA 98087 (US); Solodovnik, Eugene, Lake Stevens, WA 98258 (US); Nozari, Farhad, Woodinville, WA 98072 (US)
(74) Representative: Witte, Weller & Partner

(57) **Abstract**

A system and method for subtransient current (118) suppression in a power system (100). A generator (202) is configured to provide an output current (118) to a power distribution system (111). A current sensor (234) is configured to sense the output current (118). A switch (126) is configured to direct the output current (118) to ground (124) when the switch (126) is closed. A controller (236) is configured to close the switch (126) for a time delay (132) in response to identifying a level of the output current (118) that is greater than a threshold level (128) and to automatically open the switch(126) in response to identifying an end of the time delay(132).

## Description

The present disclosure relates generally to electrical power systems, such as systems for generating and distributing electrical power on an aircraft. The present disclosure relates more specifically to identifying undesired conditions, such as subtransient current conditions, in such power systems and protecting such systems from such undesired conditions.

Aircraft may employ various electronic devices and systems to perform various functions on the aircraft. Power for the electronic devices and systems on an aircraft may be provided by an aircraft power system. The aircraft power system may include a number of generators along with various power distribution and conversion systems. For example, a number of generators may be driven by the aircraft engines. Feeder lines may carry generated power from the generators to the various power distribution and conversion systems.

Power conversion systems on aircraft may include, for example, rectifiers and transformers. Rectifiers may be used to provide direct current (DC) power from the alternating current (AC) power provided by the generators. Transformers may be used to provide various levels of AC and DC power. Power distribution systems on aircraft may include AC and DC buses and various feeder lines for carrying power between the buses and between the buses and various loads on the aircraft.

It is desirable to protect the components of an aircraft power system from undesired conditions that may occur in the power system. An example of such an undesired condition is a fault condition that results in a subtransient fault current. A subtransient fault current is a current in the power system resulting from a fault that occurs in the time period immediately after the fault occurs. For example, the subtransient fault current may be a current in the power system resulting from the fault that occurs during the first one or more cycles after the fault occurs. Subtransient fault currents typically represent the highest level of transient currents resulting from a fault. The magnitude of subtransient fault currents may be three to four times the magnitude of normal steady state fault currents.

A subtransient event in an aircraft power system may be caused when a hard fault occurs on the main generator bus. Energy is stored in the generator air gaps and magnetics. When a hard fault occurs on the main bus, all this energy is discharged into the fault.

The duration of a subtransient event is typically relatively short. For example, a subtransient fault current may only exist for a few milliseconds after a fault occurs. For a subtransient event in an aircraft power system, after this relatively short period, a generator control unit on the aircraft may regulate the current on the generator bus back to allowable fault current limits.

It is desirable that protective and power control devices in an aircraft power system are sized to withstand undesired conditions, such as subtransient fault currents and other undesired conditions, that may occur in the aircraft power system. As the power generating capability of aircraft power systems increases, it is desirable to increase the capability of the protective and power control devices in the aircraft power system to resist higher fault levels.

The ability to withstand higher fault levels may be achieved by increasing the size of the protective and power control devices in the aircraft power system. However, using larger protective and power control devices in aircraft power systems may increase aircraft weight, which may increase aircraft operating costs in an undesired manner. Furthermore, in the past, suppliers have used undesirable contact materials to withstand the subtransient fault currents. However, such materials may have other undesired characteristics. As an alternative, fusible links may be used to provide backup protection for protective and power control devices in the aircraft power system.

Therefore, it would be desirable to have a method and apparatus that takes into account at least some of the issues discussed above, as well as other possible issues.

### SUMMARY

An embodiment of the present disclosure provides a method for suppressing a subtransient current in a power system. A controller directs a current in the power system to ground for a time delay in response to identifying a level of the current in the power system that is greater than a threshold level. The controller automatically stops directing the current in the power system to ground in response to identifying an end of the time delay.

Another embodiment of the present disclosure provides an apparatus comprising a controller. The controller is configured to direct a current in a power system to ground for a time delay in response to identifying a level of the current in the power system that is greater than a threshold level and to automatically stop directing the current in the power system to ground in response to identifying an end of the time delay.

Another embodiment of the present disclosure provides an apparatus comprising a generator, a current sensor, a switch, and a controller. The generator is configured to provide an output current to a power distribution system. The current sensor is configured to sense the output current. The switch is configured to direct the output current to ground when the switch is closed. The controller is configured to close the switch for a time delay in response to identifying a level of the output current that is greater than a threshold level and to automatically open the switch in response to identifying an end of the time delay.

According to an aspect of the present disclosure there is provided a method for suppressing a subtransient current in a power system. The method comprises directing, by a controller, a current in the power system to ground for a time delay in response to identifying a level of the current in the power system that is greater than a threshold level; and automatically stopping directing the current in the power system to ground by the controller in response to identifying an end of the time delay. Advantageously the current is an output current provided by a generator in the power system. Preferably the generator, the power system, and the controller are on an aircraft. Advantageously, the present disclosure may further comprise sensing, by the controller, a plurality of phase currents in the power system; identifying, by the controller, the level of the current in the power system that is greater than the threshold level when one of the plurality of phase currents is greater than the threshold level; and directing, by the controller, the plurality of phase currents to ground for the time delay in response to identifying the level of the current in the power system that is greater than the threshold level. Advantageously directing the current to ground comprises closing a switch to connect the current to ground and wherein automatically stopping directing the current to ground comprises automatically opening the switch in response to identifying the end of the time delay. Preferably the switch is a solid state switch. Preferably the present disclosure may further comprise changing, by the controller, a state of a switch controller from a first state to a second state in response to identifying the level of the current in the power system that is greater than the threshold level, wherein the switch is configured to be closed when the switch controller is in the second state; and automatically changing the state of the switch controller from the second state to the first state in response to identifying the end of the time delay, wherein the switch is configured to open when the switch controller is in the first state.

According to a further aspect of the present disclosure there is provided an apparatus comprising a controller configured to direct a current in a power system to ground for a time delay in response to identifying a level of the current in the power system that is greater than a threshold level and to automatically stop directing the current in the power system to ground in response to identifying an end of the time delay. Advantageously the present disclosure may further comprise a current sensor connected to the controller and configured to sense the current in the power system. Preferably the current sensor is configured to sense an output current provided by a generator in the power system and wherein the controller is configured to direct the output current to ground for the time delay in response to identifying the level of the output current that is greater than the threshold level. Preferably the current sensor is configured to sense a plurality of phase currents in the power system; and the controller is configured to identify the level of the current in the power system that is greater than the threshold level when one of the plurality of phase currents is greater than the threshold level and to direct the plurality of phase currents to ground for the time delay in response to identifying the level of the current in the power system that is greater than the threshold level. Advantageously the present disclosure may further comprise a switch connected to the controller and configured to direct the current to ground when the switch is closed and wherein the controller is configured to close the switch in response to identifying the level of the current in the power system that is greater than the threshold level and to automatically open the switch in response to identifying the end of the time delay. Preferably the switch is a solid state switch. Preferably the present disclosure may further comprise a switch controller connected to the controller and to the switch and configured to open the switch when the switch controller is in a first state and to close the switch when the switch controller is in a second state; and wherein the controller is configured to change a state of the switch controller from the first state to the second state in response to identifying the level of the current in the power system that is greater than the threshold level and to automatically change the state of the switch controller from the second state to the first state in response to identifying the end of the time delay. Advantageously the controller and the power system are on an aircraft.

According to a yet further aspect of the present disclosure there is provided an apparatus comprising a generator configured to provide an output current to a power distribution system; a current sensor configured to sense the output current; a switch configured to direct the output current to ground when the switch is closed; and a controller configured to close the switch for a time delay in response to identifying a level of the output current that is greater than a threshold level and to automatically open the switch in response to identifying an end of the time delay. Advantageously the present disclosure may further comprise a switch controller connected to the controller and to the switch and configured to open the switch when the switch controller is in a first state and to close the switch when the switch controller is in a second state; and wherein the controller is configured to change a state of the switch controller from the first state to the second state in response to identifying the level of the output current that is greater than the threshold level and to automatically change the state of the switch controller from the second state to the first state in response to identifying the end of the time delay. Advantageously the threshold level is a first threshold level and further comprising a number of power controllers connected between the power distribution system and a number of loads and wherein the number of power controllers is sized for controlling current provided to the number of loads that is less than a number of second threshold levels, wherein the number of second threshold levels is less than the first threshold level. Preferably the time delay is selected such that the level of the output current is less than the number of second threshold levels at the end of the time delay. Advantageously the generator, the power distribution system, the current sensor, the switch, and the controller are on an aircraft.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of a block diagram of a power system in accordance with an illustrative embodiment;
**Figure 2** is an illustration of a block diagram of an aircraft power system in accordance with an illustrative embodiment;
**Figure 3** is an illustration of a waveform diagram of transient currents and threshold levels in accordance with an illustrative embodiment;
**Figure 4** is an illustration of a block diagram of a switch controller in accordance with an illustrative embodiment; and
**Figure 5** is an illustration of a flowchart of a process for subtransient current suppression in accordance with an illustrative embodiment.

### DETAILED DESCRIPTION

The different illustrative embodiments recognize and take into account a number of different considerations. "A number", as used herein with reference to items, means one or more items. For example, "a number of different considerations" means one or more different considerations.

The different illustrative embodiments recognize and take into account that it is desirable to provide safe operation of a power system on an aircraft in the event that undesired conditions occur in the power system. An example of such an undesired condition is a generator fault current.

The different illustrative embodiments recognize and take into account that the generator fault current that may occur on modern commercial aircraft may be higher than on other aircraft. For example, without limitation, the subtransient fault current on modern commercial aircraft has been measured as high as 6000 amps peak.

The different illustrative embodiments recognize and take into account that the potential for relatively high fault current levels on some modern commercial aircraft has resulted in use of circuit breakers and contactors that are oversized, or use of undesired contact materials and fusible links as backup protection. For example, some circuit breaker manufacturers have used silver tungsten, silver tungsten carbide, and silver molybdenum contacts. Such materials may oxidize over time and therefore, may not be desirable materials to use in aircraft power systems.

In accordance with an illustrative embodiment, subtransient, transient, or other fault currents or combinations of fault currents in a power system may be shunted to ground through a low impedance switching device when the fault current exceeds a threshold level. The threshold level may be selected to direct the fault current to ground before the fault current reaches its full potential. The switching device is then opened after a time delay to allow current to flow into the fault. The time delay may be a selected time period. Alternatively, the end of the time delay may be identified when the fault current directed to ground falls below a desired fault current level. The appropriate time delay period for shunting the current to ground to provide subtransient or other fault current suppression may be based on characteristics of the power system. If the fault is real and an overcurrent condition persists in the power system, another protection device in the power system may be opened in response to the overcurrent condition. Since larger fault currents are directed to ground via the switching device, the size of other protection devices in the power system may be reduced.

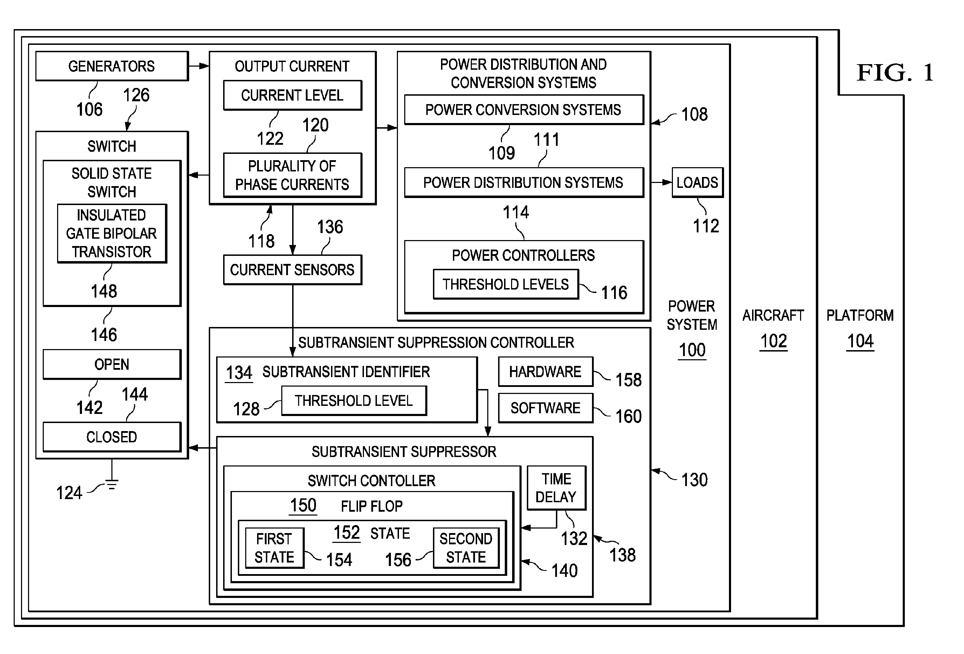

Turning now to **Figure 1****,** an illustration of a block diagram of a power system is depicted in accordance with an illustrative embodiment. In this example, power system **100** may provide electric power for aircraft **102.**

Aircraft **102** may be any type of aircraft. For example, without limitation, aircraft **102** may be a fixed wing, rotary wing, or lighter than air aircraft. Aircraft **102** may be configured for carrying passengers, cargo, both passengers and cargo, or may be used for performing any other operation or mission. Aircraft **102** may be operated by an airline, a military unit, or any other private or government entity.

Aircraft **102** is an example of platform **104** in which illustrative embodiments may be implemented. Subtransient and other fault current suppression, in accordance with an illustrative embodiment, may be provided for power system **100** on or for a platform other than aircraft **102.** For example, without limitation, platform **104** may be any vehicle that is configured for travelling through the air, in space, on land, on the surface of water, underwater, or in any other operating environment or combination of environments.

Subtransient and other fault current suppression, in accordance with an illustrative embodiment, may be provided for power system **100** on or for a platform other than a vehicle. For example, platform **104** may include any fixed or movable structure that may be provided with electrical power by power system **100.**

Power system **100** includes generators **106** and power distribution and conversion systems **108.** For example, generators **106** may be driven by operation of the engines of aircraft **102.** For example, without limitation, generators **106** may generate variable frequency three-phase AC power that is provided to power distribution and conversion systems **108.**

Power distribution and conversion systems **108** may include power conversion systems **109** and power distribution systems **111.** Power conversion systems **109** may include devices and systems that are configured to convert the AC power provided by generators **106** to electrical power for loads **112.** For example, without limitation, power conversion systems **109** may include rectifiers, transformers, rectifiers and transformers, other electrical power conversion devices or systems, or any combination of electrical power conversion devices or systems. Rectifiers may be used to provide DC power from the AC power provided by generators **106.** Transformers may be used to provide various levels of AC and DC power.

Power distribution systems **111** may include structures for distributing the electrical power to loads **112.** Power distribution systems **111** also may include a number of AC buses, a number of DC buses, or a number of AC buses and DC buses. Feeder lines may be provided for carrying power between the buses in power distribution and conversion systems **108** and between the buses in power distribution and conversion systems **108** and loads **112.**

Loads **112** may include any electrical device or system on aircraft **102** or platform **104** that uses electrical power. Loads **112** may be part of power system **100.** For example, without limitation, loads **112** may be part of aircraft **102,** or located in or on aircraft **102.**

In accordance with an illustrative embodiment, safe operation of power system **100** in the event of undesired conditions in power system **100** may be provided by power controllers **114.** For example, power controllers **114** may include various controller and protection devices that may be provided at various locations in power distribution and conversion systems **108** or at other locations or combinations of locations in power system **100.** Power controllers **114** may be configured to open contactors or other circuit breakers or to take other appropriate action in response to the identification of undesired conditions at the various locations in power system **100.**

For example, without limitation, power controllers **114** may be configured to take appropriate action to protect power system **100** when current levels, voltage levels, or other conditions or combinations of conditions at the various locations in power system **100** are identified as being greater than threshold levels **116.** Threshold levels **116** may be selected based on the characteristics of power system **100** so that appropriate action is taken at the appropriate time to protect power system **100** from undesired conditions, or to satisfy other desired conditions or combinations of conditions.

In accordance with an illustrative embodiment, generators **106** provide output current **118** to power distribution and conversion systems **108.** For example, in a multi-phase power system, output current **118** may include plurality of phase currents **120.** In any case, output current **118** may be defined by current level **122.** As a result of a fault in power system **100,** output current **118** may include a subtransient fault current or other fault current. In this case, current level **122** may rise to an undesired level.

In accordance with an illustrative embodiment, output current **118** may be directed to ground **124** via switch **126** when current level **122** is greater than threshold level **128.** In accordance with an illustrative embodiment, subtransient suppression controller **130** may be configured to identify when current level **122** is greater than threshold level **128** and to control switch **126** to direct output current **118** to ground **124** when current level **122** is greater than threshold level **128.** In accordance with an illustrative embodiment, subtransient suppression controller **130** also is configured to control switch **126** to stop directing output current **118** to ground **124** after time delay **132.**

In accordance with an illustrative embodiment, subtransient suppression controller **130** may include subtransient identifier **134** for identifying when current level **122** is greater than threshold level **128.** Subtransient identifier **134** may be configured to monitor current level **122** and to compare current level **122** to threshold level **128.** Threshold level **128** may be a fixed threshold level or may be set or changed by an operator. For example, a function implemented using software in subtransient suppression controller **130** may allow a user to set or change threshold level **128** as appropriate for different aircraft or for other reasons.

Current sensors **136** may be used to sense output current **118.** For example, without limitation, current sensors **136** may include current transformers or any other devices for sensing output current **118.** The output of current sensors **136** may be provided to subtransient identifier **134** and used by subtransient identifier **134** to identify current level **122** and to determine whether current level **122** is greater than threshold level **128.** The output of current sensors **136** also may be used to identify when the level of output current **118** directed to ground **124** falls below a desired current level.

In response to identifying current level **122** greater than threshold level **128,** subtransient identifier **134** may activate subtransient suppressor **138** to suppress the undesired high current level **122** of output current **118.** For example, subtransient suppressor **138** may be a part of subtransient suppression controller **130** that is configured to suppress the undesired current level **122** of output current **118** by directing output current **118** to ground **124** for time delay **132.** Time delay **132** may be a selected time period established by an appropriate timer device or function. Alternatively, the end of time delay **132** may be identified when the level of output current **118** directed to ground **124** falls below a desired fault current level.

Subtransient suppressor **138** may include switch controller **140.** Switch controller **140** may be configured to generate appropriate control signals for opening and closing switch **126.** For example, during normal operation of power system **100,** switch **126** may be open **142.** When switch **126** is open **142,** no current flows through switch **126.** In particular, when switch **126** is open **142,** output current **118** is not directed to ground **124** via switch **126.**

When switch **126** is closed **144,** output current **118** may flow through switch **126** to ground **124.** Thus, switch controller **140** may be configured to close switch **126** in response to identifying current level **122** greater than threshold level **128.**

Switch **126** may be implemented as solid state switch **146** that provides low impedance for output current **118** flowing through switch **126** to ground **124** when switch **126** is closed **144.** For example, without limitation, solid state switch **146** may be insulated gate bipolar transistor **148** or another appropriate solid state switching device. As another example, solid state switch **146** may be implemented using a combination of switching or other devices.

In accordance with an illustrative embodiment, switch **126** may be located as close to generators **106** as possible. Locating switch **126** close to generators **106** may take advantage of the impedance of feeder lines extending from generators **106** to power distribution and conversion systems **108** to force more of output current **118** to go through switch **126** to ground **124.** In many cases, the impedance of such feeder lines may be greater than the impedance of switch **126.**

For example, without limitation, generators **106** may be driven by aircraft engines located on the wings of aircraft **102.** Generator feeder lines may carry power from generators **106** located on the wings of aircraft **102** to power distribution and conversion systems **108** in the main body of aircraft **102.** In this case, it may be desirable to locate switch **126** near generators **106** on the wings of aircraft **102** to take advantage of the relatively high impedance of the generator feeder lines from generators **106** to the main body of aircraft **102** to force more of output current **118** to go through switch **126** to ground **124.**

In accordance with an illustrative embodiment, switch controller **140** may be configured to automatically open switch **126** after time delay **132.** Time delay **132** may be a selected time period. Alternatively, the end of time delay **132** may be identified when the level of output current **118** directed to ground **124** falls below a desired fault current threshold level.

Time delay **132** may be a fixed time period or may be based on a fixed current threshold level. Alternatively, the time period or threshold level for time delay **132** may be set or changed by an operator. For example, a function implemented using software in subtransient suppression controller **130** may allow a user to set or change time delay **132** as appropriate for different aircraft or for other reasons.

For example, without limitation, subtransient suppressor **138** may be configured to start a counter or other device for measuring time delay **132** at approximately the same time that switch controller **140** closes switch **126** in response to current level **122** being identified as greater than threshold level **128.** In this example, switch controller **140** may be configured to open switch **126** automatically in response to identifying the end of time delay **132.** In another example, switch controller **140** may be configured to open switch **126** automatically in response to identifying output current **118** directed to ground **124** that falls below a desired fault current threshold level.

In one example, switch controller **140** may include flip flop **150** or another appropriate device for latching state **152.** For example, state **152** of flip flop **150** may be either first state **154** or second state **156.** When flip flop **150** is in first state **154,** the output of switch controller **140** may control switch **126** to remain open **142.** When flip flop **150** is in second state **156,** the output of switch controller **140** may control switch **126** to be closed **144.** State **152** of flip flop **150** may change automatically from first state **154** to second state **156** in response to an indication that current level **122** of output current **118** is greater than threshold level **128.** State **152** of flip flop **150** may change automatically from second state **156** back to first state **154** in response to identifying the end of time delay **132.**

The functions performed by subtransient suppression controller **130** as described herein may be implemented in hardware **158** or in hardware **158** and software **160.** In cases where the functions performed by subtransient suppression controller **130** are implemented in hardware **158** and software **160,** subtransient suppression controller **130** may include a programmable processor unit for running software **160** to perform the desired functions. For example, without limitation, the processor unit may be a microprocessor, other processor unit, or a combination of processor units. Such a processor unit may be provided in either a general or special purpose computer or other computing device.

The processor unit may serve to run instructions for software **160** that may be loaded into memory, persistent storage, or both. The processor unit may be a number of processors, a multi-processor core, or some other type of processor, depending on the particular implementation. Further, the processor unit may be implemented using a number of heterogeneous processor systems in which a main processor is present with secondary processors on a single chip. As another illustrative example, the processor unit may be a symmetric multi-processor system containing multiple processors of the same type.

The processes of the different embodiments may be performed by the processor unit using software **160** in the form of computer-implemented instructions. Instructions for controlling the processor unit to perform the desired functions in accordance with illustrative embodiments may be located in storage devices which are in communication with the processor unit. For example, without limitation, the instructions may be in a functional form on persistent storage. These instructions may be loaded into memory for execution by the processor unit.

These instructions may be referred to as program instructions, program code, computer usable program code, or computer readable program code that may be read and executed by the processor unit. The program code in the different embodiments may be embodied on different physical or computer readable storage media, such as memory or persistent storage.

In another illustrative example, the functionality of subtransient suppression controller **130** may be implemented in a hardware unit, such as hardware **158,** that has circuits that are manufactured or configured for a particular use. This type of hardware may perform operations without needing program code to be loaded into a memory from a storage device to be configured to perform the operations.

For example, without limitation, such a hardware unit may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, without limitation, a programmable logic array, a programmable array logic, a field programmable logic array, a field programmable gate array, and other suitable hardware devices. With this type of implementation, program code may be omitted, because the processes for the different embodiments are implemented in a hardware unit.

In still another illustrative example, the functionality provided by subtransient suppression controller **130** may be implemented using a combination of processors found in computers and hardware units. Subtransient suppression controller **130** may include a number of hardware units and a number of processors that are configured to perform the desired functions. In this example, some of the functionality provided by subtransient suppression controller **130** may be implemented in the number of hardware units while other processes may be implemented in the number of processors.

In yet another illustrative example, the functionality provided by subtransient suppression controller **130** may be implemented using discrete circuit components, either alone or in combination with hardware units, processor units, or both.

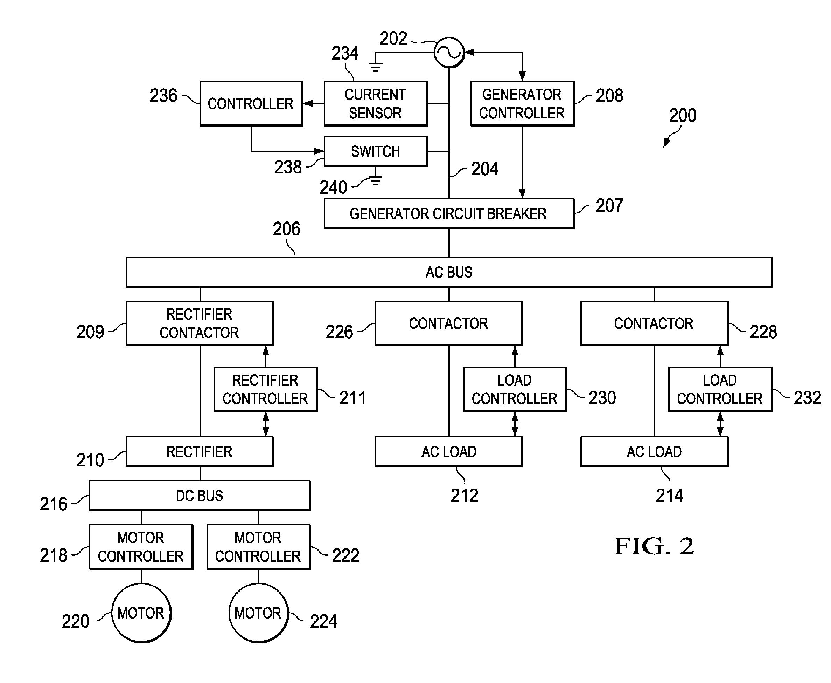

Turning now to **Figure 2****,** an illustration of a block diagram of an aircraft power system is depicted in accordance with an illustrative embodiment. In this example, power system **200** may be an example of an implementation of a portion of power system **100** for aircraft **102** in **Figure 1****.**

Power system **200** includes generator **202.** Generator **202** may be driven by an engine on an aircraft. For example, without limitation, generator **202** may generate variable frequency three-phase AC power. Generator feeder lines **204** may carry the generated AC power from generator **202** to AC bus **206.**

Generator circuit breaker **207** may be provided on generator feeder lines **204.** Generator circuit breaker **207** may be any device that is configured to disconnect AC bus **206** from generator **202** when generator circuit breaker **207** is opened. For example, without limitation, generator circuit breaker **207** may be controlled by generator controller **208** to disconnect AC bus **206** from generator **202** in response to the identification of an undesired condition in power system **200.**

AC bus **206** is configured to distribute the AC power provided by generator **202** to various loads. For example, without limitation, AC bus **206** may be configured to distribute the AC power provided by generator **202** to rectifier **210,** AC load **212,** and AC load **214.**

Rectifier contactor **209** may be provided between AC bus **206** and rectifier **210.** Rectifier contactor **209** may be any device that is configured to disconnect rectifier **210** from AC bus **206** when rectifier contactor **209** is opened. For example, without limitation, rectifier contactor **209** may be controlled by rectifier controller **211** to disconnect rectifier **210** from AC bus **206** in response to the identification of an undesired condition in power system **200.**

Rectifier **210** may be configured to convert the AC power provided on AC bus **206** to DC power. Rectifier **210** may be any AC to DC power converter. DC power from rectifier **210** may be provided on DC bus **216.**

Various DC loads may be powered by the DC power on DC bus **216.** For example, without limitation, such DC loads may include motor controller **218,** motor **220,** motor controller **222,** and motor **224.** In alternative embodiments, DC loads connected to DC bus **216** may include a single motor and motor controller or more than two motors and motor controllers. In another alternative embodiment, the DC loads connected to DC bus **216** may additionally or alternatively comprise a number of DC loads other than motors and motor controllers.

Motors **220** and **224** may be any type of electric motor. For example, without limitation, motors **220** and **224** may be induction motors, permanent magnet motors, synchronous motors with independent excitation, or any other type of electric motor. Motors **220** and **224** may be the same or different types of motors.

Motor controllers **218** and **222** may be any type of motor controllers that are appropriate for controlling motors **220** and **224,** respectively. Depending on the type of motor to be controlled, motor controllers **218** and **222** may be of any appropriate size and complexity. In one example, motor controller **218,** motor controller **222,** or both may be solid state multifunctional motor controllers that provide power conversion for driving motor **220** or motor **224,** respectively. A motor controller of this type may be used to drive various types of motors and motor loads.

AC loads **212** and **214** may be any number of AC loads. Contactor **226** may be provided between AC bus **206** and AC load **212.** Contactor **228** may be provided between AC bus **206** and AC load **214.** Contactors **226** and **228** may be any devices that are configured to disconnect AC load **212** from AC bus **206** when contactor **226** is opened and to disconnect AC load **214** from AC bus **206** when contactor **228** is opened. For example, without limitation, contactor **226** may be controlled by load controller **230** to disconnect AC load **212** from AC bus **206** in response to the identification of an undesired condition in power system **200.** Contactor **228** may be controlled by load controller **232** to disconnect AC load **214** from AC bus **206** in response to the identification of an undesired condition in power system **200.**

In this example, rectifier **210** is an example of one of power conversion systems **109** in **Figure 1****.** AC bus **206** and DC bus **216** are examples of power distributions systems **111** in **Figure 1****.** Generator controller **208,** rectifier controller **211,** load controller **230,** and load controller **232** are examples of power controllers **114** in **Figure 1****.**

In this example, current sensor **234** may be configured to sense the current at the output of generator **202.** The output of current sensor **234** may be provided to controller **236.** In this example, controller **236** is an example of subtransient suppression controller **130** in **Figure 1****.**

Controller **236** may use the output provided by current sensor **234** to identify a level of the current provided from generator **202** to AC bus **206** on generator feeder lines **204** and to determine whether the level of the current from generator **202** is greater than a threshold level. In response to identifying a level of current that is greater than the threshold level, controller **236** may close switch **238** to direct the current from generator **202** to ground **240** for a selected time period. Controller **236** may open switch **238** to stop directing the current from generator **202** to ground **240** in response to identifying the end of the selected time period or when a desired fault current level has been obtained.

The illustrations of **Figure 1** and **Figure 2** are not meant to imply physical or architectural limitations to the manner in which different illustrative embodiments may be implemented. Other components in addition to, in place of, or both in addition to and in place of the ones illustrated may be used. Some components may be unnecessary in some illustrative embodiments. Also, the blocks are presented to illustrate some functional components. One or more of these blocks may be combined or divided into different blocks when implemented in different illustrative embodiments.

For example, without limitation, a subtransient suppression controller in accordance with an illustrative embodiment may perform a functionality test each time the system is powered up. This functionality test may be implemented in software in the subtransient suppression controller.

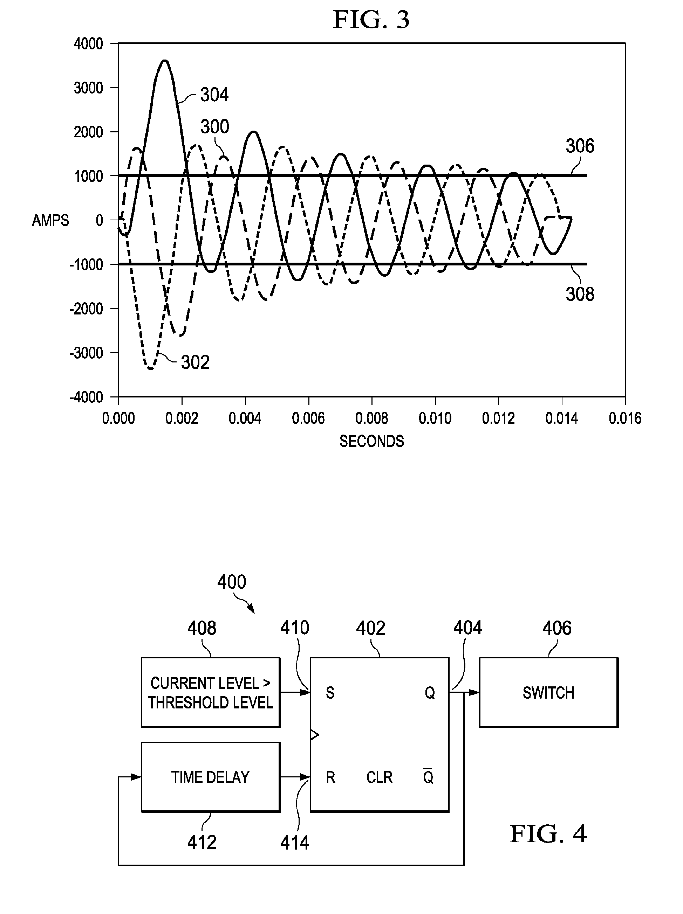

Turning now to **Figure 3****,** an illustration of a waveform diagram of transient currents and threshold levels is depicted in accordance with an illustrative embodiment. In this example, waveforms **300, 302,** and **304** illustrate the levels of three phase currents in amps over a period of time. In this example line **306** indicates a threshold level at 1000 amps and line **308** indicates a threshold level at -1000 amps. In accordance with an illustrative embodiment, the currents represented by waveforms **300, 302**, and **304** may be directed to ground for a selected time period in response to identifying a level of any one of the phase currents represented by waveforms **300, 302,** and **304** that is greater, in absolute value, than the threshold levels indicated by lines 306 and 308. In this example, if the time period is selected to be approximately 0.015 seconds, the peak current levels of the phase currents represented by waveforms **300, 302,** and **304** would be within the threshold levels indicated by lines **306** and **308** when directing the phase currents to ground is stopped.

Turning now to **Figure 4****,** an illustration of a block diagram of a switch controller is depicted in accordance with an illustrative embodiment. In this example, switch controller **400** is an example of one implementation of switch controller **140** in **Figure 1****.**

In this example, switch controller **400** includes flip flop **402.** Output Q **404** of flip flop **402** is connected to switch **406.** Output Q **404** of flip flop **402** is set in response to an indication that current level is greater than threshold level **408** received at input S **410** of flip flop **402.** Switch **406** may be closed in response to setting output Q **404** of flip flop **402.**

Output Q **404** of flip flop **402** is connected via time delay **412** to input R **414** of flip flop **402.** Thus, output Q **404** of flip flop **402** is cleared after time delay **412** in response to setting output Q **404** of flip flop **402.** Switch **406** may be opened in response to clearing output Q **404** of flip flop **402.**

Time delay **412** may be a timer device or function that is initiated to start timing a selected time period when output Q **404** of flip flop **402** is set. In this case, output Q **404** of flip flop **402** may be cleared in response to the timer device or function indicating the end of the selected time period. Alternatively, time delay **412** may include a device or function for identifying a fault current level that falls below a desired fault current level. In this case, output Q **404** of flip flop **402** may be cleared in response to the device or function identifying a fault current level that falls below the desired fault current level.

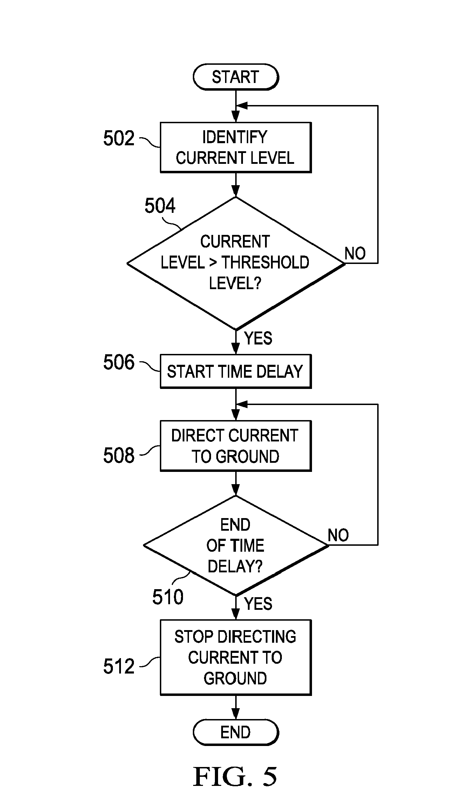

Turning now to **Figure 5****,** an illustration of a flowchart of a process for subtransient current suppression is depicted in accordance with an illustrative embodiment. The process of **Figure 5** may be implemented, for example, by subtransient suppression controller **130** in **Figure 1****.**

The process begins by identifying a current level in a power system (operation **502).** It then may be determined whether the current level is greater than a threshold level (operation **504).** If the current level is not greater than the threshold level, the process returns to operation **502.** Operations **502** and **504** may be repeated until a current level that is greater than the threshold level is identified.

If it is determined at operation **504** that the current level is greater than the threshold level, a time delay may be started (operation **506)** and the current may be directed to ground (operation **508).** For example, the current may be directed to ground by closing a solid state switch. It then may be determined whether the time delay is ended (operation **510).** For example, the time delay may be ended after a selected time period or when the current directed to ground falls below a desired current level. If the time delay is not ended, the process returns to operation **508** and the current continues to be directed to ground until the time delay is ended. If it is determined at operation **510** that the time delay is ended, directing the current to ground is stopped (operation **512),** with the process terminating thereafter. For example, stopping directing the current to ground may include opening the solid state switch.

The flowcharts and block diagrams in the different depicted embodiments illustrate the structure, functionality, and operation of some possible implementations of apparatuses and methods in different illustrative embodiments. In this regard, each block in the flowcharts or block diagrams may represent a module, segment, function, or a portion of an operation or step. In some alternative implementations, the function or functions noted in the blocks may occur out of the order noted in the figures. For example, in some cases, two blocks shown in succession may be executed substantially concurrently, or the blocks may sometimes be executed in the reverse order, depending upon the functionality involved.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for suppressing a subtransient current in a power system (100), comprising:
directing, by a controller (236), a current (118) in the power system (100) to ground (124) for a time delay (132) in response to identifying a level of the current in the power system (100) that is greater than a threshold level (128); and
automatically stopping directing the current in the power system (100) to ground (124) by the controller (236) in response to identifying an end of the time delay (132).

2. The method of claim 1, wherein the current is an output current (118) provided by a generator (202) in the power system (100).

3. The method of claim 2, wherein the generator (202), the power system (100), and the controller (236) are on an aircraft (102).

4. The method of any preceding claim further comprising:
sensing, by the controller (236), a plurality of phase currents (120) in the power system (100);
identifying, by the controller (236), the level of the current in the power system (100) that is greater than the threshold level (128) when one of the plurality of phase currents (120) is greater than the threshold level (128); and
directing, by the controller (236), the plurality of phase currents (120) to ground (124) for the time delay (132) in response to identifying the level of the current in the power system (100) that is greater than the threshold level (128).

5. The method of any of claims 1 to 4, wherein directing the current to ground (124) comprises closing a switch (126) to connect the current to ground (124) and wherein automatically stopping directing the current to ground (124) comprises automatically opening the switch (126) in response to identifying the end of the time delay (132).

6. The method of claim 5, wherein the switch (126) is a solid state switch (148).

7. The method of claim 6 further comprising:
changing, by the controller (236), a state of a switch controller (140) from a first state (154) to a second state (156) in response to identifying the level of the current in the power system (100) that is greater than the threshold level (128), wherein the switch (126) is configured to be closed (144) when the switch controller (140) is in the second state (156); and
automatically changing the state of the switch controller (140) from the second state (156) to the first state (154) in response to identifying the end of the time delay (132), wherein the switch (126) is configured to open (142) when the switch controller (140) is in the first state (154).

8. An apparatus, comprising:
a controller (236) configured to direct a current in a power system (100) to ground (124) for a time delay (132) in response to identifying a level of the current in the power system (100) that is greater than a threshold level (128) and to automatically stop directing the current in the power system (100) to ground (124) in response to identifying an end of the time delay (132).

9. The apparatus of claim 8 further comprising a current sensor (234) connected to the controller (236) and configured to sense the current in the power system (100).

10. The apparatus of claim 9, wherein the current sensor (234) is configured to sense an output current (118) provided by a generator (202) in the power system (100) and wherein the controller (236) is configured to direct the output current (118) to ground (124) for the time delay (132) in response to identifying the level of the output current (118) that is greater than the threshold level (128).

11. The apparatus of claim 9, wherein:
the current sensor (234) is configured to sense a plurality of phase currents (120) in the power system (100); and
the controller (236) is configured to identify the level of the current in the power system (100) that is greater than the threshold level (128) when one of the plurality of phase currents (120) is greater than the threshold level (128) and to direct the plurality of phase currents (120) to ground (124) for the time delay (132) in response to identifying the level of the current in the power system (100) that is greater than the threshold level (128).

12. The apparatus of any of claims 8 to 11 further comprising a switch (126) connected to the controller (236) and configured to direct the current to ground (124) when the switch (126) is closed (144) and wherein the controller (236) is configured to close (144) the switch (126) in response to identifying the level of the current in the power system (100) that is greater than the threshold level (128) and to automatically open (142) the switch (126) in response to identifying the end of the time delay (132).

13. The apparatus of claim 12, wherein the switch (126) is a solid state switch (148).

14. The apparatus of claim 13 further comprising a switch controller (140) connected to the controller (236) and to the switch (126) and configured to open (142) the switch (126) when the switch controller (140) is in a first state (154) and to close (144) the switch (126) when the switch controller (140) is in a second state (156); and
wherein the controller (236) is configured to change a state (152) of the switch controller (140) from the first state (154) to the second state (156) in response to identifying the level of the current in the power system (100) that is greater than the threshold level (128) and to automatically change the state (152) of the switch controller (140) from the second state (156) to the first state (154) in response to identifying the end of the time delay (132).

15. The apparatus of any of claims 8 to 14 wherein the controller (236) and the power system (100) are on an aircraft (102).
